# NEW EUROPEAN PATENT SPECIFICATION

(11) **EP 1 549 704 B2**
(45) Date of publication and mention of the opposition decision: **03.08.2011**
(45) Mention of the grant of the patent: 15.02.2006
(21) Application number: 02785174.0
(22) Date of filing: 08.10.2002
(51) Int. Cl.: C08K 5/00

(54) **STABILIZED POLYMER COMPOSITION**
STABILISIERTE POLYMERZUSAMMENSETZUNG
COMPOSITION POLYMERE STABILISEE

(43) Date of publication of application: 06.07.2005
(73) Proprietor: Borealis Technology Oy, 06101 Porvoo (FI)
(72) Inventor: OEYSAED, Harry, N-3960 Stathelle (NO); JAMTVEDT, Svein, N-3960 Stathelle (NO); FROEHAUG, Astrid, E., N-3960 Stathelle (NO)
(74) Representative: Viering, Jentschura & Partner
(86) International application number: PCT/EP2002/011258
(87) International publication number: WO 2004/033545

(56) References cited:
- EP-A- 0 115 885
- EP-A- 0 227 948
- EP-A- 0 330 256
- EP-A- 0 343 863
- EP-A- 0 423 346
- EP-A- 0 450 304
- EP-A- 0 827 979
- EP-A2- 0 411 628
- US-A- 5 298 540
- US-B1- 6 197 886
- US-B1- 6 274 678
- DATABASE WPI Section Ch, Week 200138 Derwent Publications Ltd., London, GB; Class A17, AN 2001-365817 XP002243985 & RU 2 166 217 C (REAL SERVICE CABLE CORP) , 27 April 2001 (2001-04-27)
- 'Advances in Chemistry Series', 1996, ISSN 0065-2393 article G.J.KLENDER: 'Fluorophosphonites as co-stabilizers in stabilization of polyolefins', pages 397 - 423
- H. ZWEIFEL: 'Plastics Additives Handbook', vol. 5TH ED., 2001, CARL HANSER VERLAG pages 103 - 112

## Description

### Technical field

The present invention relates to a stabilized polymer composition comprising a polyolefin and a composition of antioxidants which reduces degradation of plastic materials during processing and end-use and thus, increases the long term thermal stability of those plastic materials. Moreover, this invention relates to methods for producing a final polymeric article with an increased long term thermal stability and stabilization against ageing by radical decomposition processes and polymeric intermediate materials as well as polymeric articles comprising the inventive antioxidant composition.

### Background art

Recent advances in the manufacturing and processing of plastic polymers have led to the application of plastics in virtually every aspect of modern day life. However, polymeric compounds are prone to ageing under the effects of light, oxygen and heat. This results in a loss of strength, stiffness and flexibility, discolouration and scratching and loss of gloss.

Polymeric compounds, for example polyolefines like polyethylene and polypropylene undergo radical driven degradation processes especially during processing steps which might include moulding, extrusion etc. However, degradation even proceeds during end-use by a radical mechanism under the influence of light, heat etc. and will finally destroy the polymer properties.

It is well-known in the art that antioxidants and light stabilizers can prevent or at least reduce these effects. Several types of additives are added to polymers to protect them during processing and to achieve the desired end-use properties. Additives are generally divided in stabilizers and modifiers. Typical modifiers are antistatic- and antifogging agents, acid scavengers, blowing agents, cling agents, lubricants and resins, nucleating agents, slip- and anti-blocking agents as well as fillers, flame retardants, compatibilizers and crosslinkers.

Antioxidants traditionally and currently used comprise hindered phenolics, aromatic amines, organo-phosphites/phosphonites and thioethers. Neutralizers are often used to boost performance and diminish effects of residual polymer acidity.

Because of its sensitivity to oxidation, stabilization of polypropylene polymers against thermal oxidation is extremely important. Polypropylene polymers are probably the polymer most studied in this respect. At elevated temperatures and with excess of air, polypropylene polymers disintegrate to powdery oxidation products. This process is characterized by relatively well-defined and reproducible induction periods, commonly called oven lifetimes. Endpoints are easily detected even visually. The disintegration begins mostly at the etches and corners of the test species. It is often accompanied by yellow to brown discoloration.

An important aspect of process stabilization is that the degradation reaction products produced during processing can accelerate other types of a degradation later in the polymer life time, e.g. impede the light stability of the polymer.

For this reason, effective processing stability is essential in the production of durable plastic and articles.

Long term heat stability (LTHS) is an important property for many applications of polymers, especially polyolefines. Generally, long term thermal stability requirements are met by adding high concentrations of phenol antioxidants or combinations of phenols and thioethers to the polymer. Problems with such systems may be that tendency to yellowing increased by increased phenol concentrations or that the thioether may influence organoleptic properties in a negative way.

There are several approaches known in the prior art which address the problem of stabilization of polymers against radical decomposition which among others finally results in a loss of long term thermal stability of a polymer.

For example, US 6,015,854 teaches propylene-ethylene copolymers of high clarity and therefore incorporates clarifying agents into the copolymer mixture, however, the compositions disclosed therein may also contain stabilizers, antioxidants, lubricants, acid acceptors, synergists, antistatic agents, nucleating agents and additives which stabilize against radiation. To improve long term thermal stability, primary antioxidants of phenolic-type were added. Furthermore, it is stated that second type antioxidants like phosphites or hindered amines provide for an improved stability in melt flow and colour during the melt processing of the plastic material. The functions of all other primary and secondary antioxidants mentioned in the reference are well-known in the art. It is also disclosed that the synergistic enhance of the primary antioxidants can be achieved by including thioethers. However, this reference focuses on clarity of the plastic material and consequently none of the properties measured in the examples is related to long term heat stability.

US 6,022,946 is directed to a method of deactivating catalyst residue in a polyolefin in a post-reactor vessel containing carbon monoxide. Claim 1 mentions the incorporation of an acid acceptor and at least one secondary antioxidant into the deactivated polyolefin polymer. This secondary antioxidant may be an organic phosphite. Primary antioxidants including phenolic types are also mentioned with the main function to provide long term thermal stability. The synergistic enhance of this performance by including thioethers is also noted. Secondary antioxidants including phosphites are mentioned which provide for improved colour and reduced melt flow breaking tendency. Again, this reference does not teach anything going beyond the general knowledge in the art according to which long term thermal stability can be controlled by the addition of a primary antioxidant and optionally a synergistic thio-compound.

Though US 6,197,886 relates to polypropylene impact copolymers having improved mechanical properties, similar comments can be provided again.. There are polymeric compositions disclosed which may contain antioxidants. Primary antioxidants, including phenolic types are mentioned with the main function to provide long term heat stability. The synergistic enhance of this performance by including thioethers is also mentioned. Furthermore, addition of secondary antioxidants including phosphites with the focus on the improvement of the melt processing are disclosed as well. However, nothing can be taken from that reference which would enable the skilled artisan to achieve an improved long term thermal stability exceeding those already known in the art.

Furthermore, US 6,090,877 relates to a low smoke forming, acid neutralized propylene polymer composition comprising a propylene and an acid scavenging amount of mono potassium citrate. Phenolics and phosphites are mentioned as possible antioxidants for polypropylene together with potassium citrate as an acid scavenger but this reference is quiet with regard to long term thermal stability of the propylene polymer compositions.

Another prior art reference (Zweifel, H., Stabilization of Polymeric Materials, Springer-Verlag, 1998, p. 76) reflects the general and well-established view in the art on the best mode to control long term thermal stability in polymers:
"In contrast to stabilization during processing, the presence of phosphites had not significant influence on long term thermal ageing of polyolefines".

Likewise, Schwartzenbach et al., in Zweifel's, Plastic. Additives Handbook, 5th edition, Hanser Publishers, 2001, p. 53 states:
"Phosphites do not contribute to long term thermal stability themselves. Long term thermal stability is only protected by the available phenol concentration. To improve long term thermal stability, thiosynergists as hydroperoxide decomposers in combination with a phenol are recommended."

Though, the necessary level of long term stability of a specific plastic material very much depends on the intended technical application thereof, there still exists a continued need for an improved control of this polymer property during processing steps and end use of the polymer. As discussed above, the prior art teaching suggests to apply an antioxidant composition of a phenolic compound and a thiosynergist for hydroperoxide decomposition to the polymeric base material to reduce long term thermal ageing.

Therefore, the major focus to increase long term thermal stability of a polymer relied so far in the provision of improved phenolic-type and thioether antioxidants. That is to say, specific antioxidant compounds were developed which provide for example for a low volatility, high melting point, hydrolytic and thermal stability as well as the absence of unwanted side effects like having a colouring effect or an unclean toxicological profile which could jeopardize FDA and/or EU-SCF approvals. Most of those properties of the state of the art antioxidants are met by the unique structural features of these compounds, for example bulky residues of tert.-butyl substituted phenyl residues which provide for sterical hindrance to lower volatility in combination with a high molecular weight of those compounds.

In the state of art, the most obvious way to further increase long term thermal stability is generally seen in the use of higher amounts of those antioxidants. However, it is likewise obvious that simply increasing the antioxidant concentration in the polymer composition will most likely affect the properties of the final plastic material in a negative way. Therefore, it is highly desirable to be able to reduce long term thermal ageing with even less antioxidant compounds used in the polymer composition.

### Description of the invention

The inventors of the present application have addressed this issue by a different approach than those described above in the prior art. The underlying problem of this invention is to be seen in the provision of polymers comprising specific antioxidant compositions which already allow to improve long term thermal stability of said polymeric material at very low concentrations of antioxidant compounds. Moreover, at the same time this stability towards thermal ageing should be further increased in view of long term thermal stabilities achieved so far by prior art approaches. Furthermore, such a composition of antioxidants should provide for a highly effective and versatile stabilization which is useful in a wide variety of applications. Likewise, this composition should be characterized by its superior thermal stability and low volatility, excellent atmospheric and in-polymer hydrolytic stability, outstanding protection against discoloration and degradation during processing, and excellent protection against long term polymer degradation.

In accordance with this objective, and other objectives that will be readily apparent to those skilled in the art upon reading this disclosure, it was surprisingly found that the specific combination of a phenolic compound together with a phosphite and a sulphur-containing compound substantially increase the long term heat stability of a polymer at unexpected low concentrations.

In accordance with the invention, it is provided a stabilized polymer composition comprising a polyolefin and an antioxidant composition for improving the long term heat stability of polyolefins, said antioxidant composition comprising:
(a) 0.01% - 0,5% by weight of at least one sterically hindered phenolic compound, wherein said phenolic compound contains at least one phenolic moiety of general formula (i):

   [HO-(R₁R₂R₃R₄Phenyl)-] (I)

   wherein R₁, R₂, R₃ or R₄ may be the same or different and at least one of R₁, R₂, R₃ or R₄ is selected from the group consisting of branched alkyl having 1 to 12 carbon atoms, preferably tert.-butyl, iso-propyl, cyclohexyl, cyclopentyl and adamantyl, the others of R₁, R₂ R₃ or R₄ being H or lower alkyl having 1 to 6 carbon atoms;
(b) 0,01% - 0,5% by weight of one phosphorous compound, wherein said one phosphorous compound is bis(2,4-dicumylphenyl)pentaerythritol diphosphite,
(c) 0.01% - 1% by weight of at least one sulphur-containing compound of general formula (III):

   R₈-(S)ₓ-R₉ (III)

   wherein x =1 or 2, and wherein R₈ and R₉ may be the same or different and are selected from the group consisting of C₁₀₋C₂₅ alkyl groups optionally being substituted with C₁-C₁₂ alkyl ester carboxylates,
   wherein said % by weight values are referred to the polymer composition.

In a preferred embodiment the stabilized polymer composition comprises a polyolefin and an antioxidant composition,
wherein said antioxidant composition comprises:
(a) 0.02% - 0.2% by weight of said at least one sterically hindered phenolic compound.
(b) 0,03% - 0.2% by weight of one phosphorous compound, wherein said one phosphorous compound is bis(2,4-dicumylphenyl)pentaerythritol diphosphite, and
(c) 0,05% - 0,6% by weight of said at least one sulphur-containing compound of general formula (III),
wherein said % by weight values are referred to the polymer composition.

In a further preferred embodiment, the stabilized polymer composition comprises a polyolefin and an antioxidant composition, wherein said antioxidant composition comprises:
(a) 0,03% - 0,15% by weight of said at least one sterically hindered phenolic compound,
(b) 0,05% - 0,15% by weight of one phosphorous compound, wherein said one phosphorous compound is bis(2,4-dicumylphenyl)pentaerythritol diphosphite, and
(c) 0,1% - 0,5% by weight of said at least one sulphur-containing compound of general formula (III),
wherein said % by weight values are referred to the polymer composition.

When using the inventive antioxidant composition, further compounds selected from additives, fillers, minerals and lubricants can be compounded to the polyolefin for improving the processability and surface characteristics thereof.

The phenolic compound contains preferably at least one phenolic molety of general formula (Ia):

HO-(R₁R₂R₃R₄Phenyl)-W (Ia)

wherein R₁ and R₄ being in the 2- and 6-position of the phenol residue may be the same or different and are selected from the group consisting of preferably branched C₁ to C₁₂ alkyl, particularly tert.-buty, iso-propyl, cyclohexyl, cyclopentyl and adamantyl residues. R₂ and R₃ having the meaning as given before, and W to selected from C₁ to C₁₂ alkyl, C₁ to C₁₂ alkoxy, C₁ to C₂₂ alkyl carboxylate or C₁ to C₁₂ alkyl substituted by a further group of the formula HO-(R₁R₂R₃R₄Phenyl)-, wherein R₁ to R₄ have the meaning as indicated before.

In accordance with the present invention, it is particularly preferred that at least one of the following phenolic-type antioxidant compounds is comprised by the inventive antioxidant compositions. These are the sterically hindered phenolic compounds:
- 2,8-Di-tert.-butyl-4-methylphenol;
- Pentaerythrityl-tetrakis(3-(3',5'di-tert.-butyl-4-hydroxyphenyl)-propionate:
- Octadecyl 3-(3',5'-di-tert-buty(-4-hydroxyphenyl) propionate;
- 1,3,5,-Trimethyl-2,4,6-tris-(3,5-di-tert.-butyl-4-hydroxyphenyl) benzene:
- 2,2'-Thiodiethylene-bis-(3,5-di-tert.-butyl-4-hydroxyphenyl)-propionate:
- Calcium-(3,5-di-tert.-butyl-4-hydroxy benzyl monoethyl-phosphonate);
- 1,3,5-Tris(3',5'-di-tert.butyl-4'-hydroxybenzyl)-isocyanurate;
- Bis-(3,3-bis-(4'-hydroxy-3'-tert-butylphanyl)butanoic acid)-glycolester,
- 4,4'-Thiobis (2-tert.-butyl-5-methylphenol);
- 2,2'-Methylen-bis(6-{1-methyl-cyclohexyl)para-cresol):
- N,N'-hexamethylene bis(3,5-di-tert. Butyl-4-hydroxyhydrocinnamamide;
- 2,5,7,8-Tetramethyl-2(4',8',12'-trimethyltridecyl)chroman-6-ol;
- 2,2'-Ethylidenebis (4,6-di-tert-butylphenol);
- 1,1,3-Tris(2-methyl-4-hydrosy-5-tert.-butylphenyl)butene;
- 1,3,5-Tris(4-tert.-butyl-3-hydroxy-2,6-dimethylbenzyl)- 1,3,5-triazine-2,4,6-(1H,3H,5H)-trione:
- 3,9-Bis(1,1-dimethyl -2-(bets-(3-tert.-butyl-4-hydroxy-5-methylphenyl)propionyloxy)ethyl)-2,4,8,10-tetreoxaspiro (5,5)undecane;
- 1,6-Hexanediyl-bis(3,5-bis(1,1-dimethylethyl)-4-hydroxybanzene-propanoate);
- 2,8-Di-tert.-butyyl-4-nonylphenol;
- 3,5-Di-tert-butyl-4-hydroxyhydrocinnamic acid triester with 1,3,5-tris(2-hydroxyetryl)-s-trazine.2,4,6(1H,3H,5H) -trione:
- 4,4'-Butylidenebis(B-tert Butyl-3-methylphenol);
- 2,2'-Methylene bis (4-methyl-6-tert.-butylphenol):
- 2,2-Bis(4-(2-(3,5-di-butyl-bydroxyhydrocinnamayloxy)) ethoxyphenyl)propane:
- Triethyleneglycole-bis-(3-tert.-butyl-4-hydroxy-5 methylphenyl) propionate;
- Benzenepropanoic acid, 3,5-bis(1,1-dimethytethyl)-4-hydroxy-,C₁₃-C₁₅-branched and linear alkyl eaters;
- 6,6'-Di-tert.-butyl-2,2'-thiodl-p-cresol;
- Diethyl((3,5-bis(1,1-dimethylethyl)-4-hydroxyphenyl)methyl) phosphonate;
- 4,6-Bis(octylthiomethyl)o-cresol;
- Benzenepropanoic acid, 3.5-bis(1,1-dimethylehyl)4-hydroxy-, C₇-C₉-brenched and linear alkyl esters,
- 1,1,3-Tris[2'methyl-[3'(3,5-di-t-butyl-4-hydroxyphenyl)propionyloxy]-5-t-butylphenyl] butane; and
- a butylated reaction product of p-cresol and dicyclopentadiene.

Among those compounds, the following phenolic-type antioxidant compounds are especially preferred to be Included in the antioxidant composition according to the present invention:
- Pentaerythrityl-tetrakis(3-(3',5'-di-tert.-butyl-4-hydroxypheyl)-propionate;
- Octadecyl 3-(3',5'-di-tert.-butyl-4-hydroxyphenyl) Propionate;
- 1,3,5-Trimethyl-2,4,6-tris-(3,5-di-tert-butyl-4-hydroxyphenyl) benzene;
- 1,3,5-Tris(3',5'-di-tert-butyl-4'-hydroxybenzyl)-isoacyanurate.
- bis-(3,3-bis-(4'-hydroxy-3'-tert-butylphenyl)butanoic acid)-glycolester and
- 3,9-Bis(1,1-dimethyl-2-(beta-(3-tert.-butyl-4-hydroxy-5-methylpheny)propionyloxy)ethyl)-2,4,8,10-tetraoxespiro (5,5)undecans;
The following phosphite/phosphonite-type antioxidant compound is included in an antioxidant composition according to the present invention:
- Bis(2,4-dicumylphenyl)pentaerythritol diphosphite.

In accordance with the present invention, the sulphur-containing compound of general formula (III):

R₈-(S)ₓ-R₉ (III)

is selected from Di(C₁-C₂₀)alkyl-(S)ₓ-dil-carboxylate wherein the carboxylic acid is selected from C₁ to C₁₀ alkyl carboxylic adds. Some of those preferred compounds are exemplified as follows:
- Di-stearyl-thio-di-propionate;
- Di-palmityl/stearyl-thio-di-propionate;
- Di-lauryl-thio-di-propionate;
- Di-tridecyl-thio-di-propionate;
- Di-myristyl-thio-di-propionate;
- Pentaerythritol octyl thiodipropionate;
- Lauryl-stearyl-thio-di-propionate;
- Di-octadecyl-disulphide;
- Di-tert-dodecyl-disulphide; and
- Pentaerythritol-tetrakis-(3-laurylthiopropionate);
wherein Di-stearyl-thio-di-propionate and Di-tert-dodecyl-disulphide are especially preferred.

In a particularly preferred embodiment, the inventive antioxidant composition is such that it comprises a mixture of, as the sterically hindered phenolic compound, 1,3,5-Tris(4-tert.-butyl-3-hydroxy-2,6-dimethylbenzyl)-1,3,5-triazine-2,4,6-(1H,3H,5H)-trione or Pentaerythrityl-tetrakis(3-(3',5'-di-tert.-Butyl-4-hydroxyphenyl)-propionate, as the phosphite compound, bis(2,4-dicumylphenyl)pentaerythritol diphosphite; and, as the sulphur-containing compound, di-stearyl-thio-di-propionate. Moreover, the inventive antioxidant composition may optionally further comprise metal deactivators and/or UV-stabilisers, wherein preferably said UV-stabilizers are sterically hindered amines.

In accordance with a further object, the present invention, provided for the use of the above-described antioxidant composition to reduce degradation of a polymeric material by radical mechanisms during processing and end use of said polymeric material and preferably to increase the long term thermal stability of the polymeric material.

In yet another object of the present invention, there is provided a method for producing a final polymeric article with an increased long term thermal stability against ageing by radical degradation processes comprising the steps of:
(a) providing an unstabilised base polymer material;
(b) adding to said base polymer material the inventive antioxidant composition;
(c) converting the composition obtained in step (b) in a melt-forming process; and
(d) confectioning the polymeric material obtained in step (c).

This method may optionally include the further step concerning the addition of other stabilisers and/or modifiers before the converting step.

The converting step typically includes injection moulding, blow moulding, rotational moulding and/or extrusion and the confectioning step generally comprises cutting, lamination and/or welding.

Furthermore, it is still another object of the present invention to provide a polymeric article having a long term ageing stability and being obtainable by one of the above-described methods for producing a final polymeric article.

### Examples

In each of the following formulations of antioxidant compositions, the thioether Di-stearyl-thio-di-propionate was used as the sulphur-containing compound (c) at a concentration of 3000 ppm. Furthermore, a polypropylene homopolymer in form of an unstabilised powder was selected to verify the effect of the inventive antioxidant compositions on long term thermal stabilization. Beside the inventive antioxidant compositions, only 600 ppm Ca-stearate and partly 2000 ppm talc were further included into the polymer mixture as non-antioxidant additives where indicated.

The compounding steps were carried out for each formulation in a Prism extruder at the extruder condition of 210°C, 1 bar N₂.

### Base polymer:

PP-homopolymer unstabilised powder mfr (230°C/2.16 kg) 3 g/10 min.

### Non-antioxidant additives:

Ca-stearate (Calcium stearate SP, Faci, NO1,), talc (Tital 10, Incemin AG, NO2,)

### Antioxidant additives:

(a) Phenolic-type compound (I)
   - Pentaerythrityl-tetrakis(3-(3',5'-di-tert.-butyl-4-hydroxyphenyl)-propionate (Irganox 1010 ™, Ciba Specialty Chemicals, AO-I-1),
   - 1,3,5-Tris(4-tert.-butyl-3-hydroxy-2,6-dimethylbenzyl)-1,3,5-triazine-2,4,6-(1H,3H,5H)-trione (Cyanox 1790 ™, Cytec, Inc., AO-I-2),
(b) Phosphite-type compound (II)
   - Tris(2,4-di-t-butylphenyl)phosphite (Irgafos 168 ™, Ciba Specialty Chemicals, AO-II-1),
   - Bis(2,4-dicumylphenyl)pentaerythritol diphosphite (Doverphos S-9228 ™, Dover Chemical Corp., AO-II-2)
(c) Sulphur-containing compound (III)
   - Di stearyl-thio-di-propionate (Irganox PS-802, Ciba Specialty Chemicals, AO-III)

Table 1 provides an overview of the concentration of each antioxidant and non-antioxidant additive which are incorporated into the polypropylene homopolymer compositions of Examples 1-10.

After prism extrusion, MFR and YI were determined for each sample. With regard to Examples of Ref. No. 1,3 and 7-10 multiple extrusion at a Brabender extruder were carried out.

Long term heat stability was determined for each sample on pellets at 150°C. When degraded pellets were observed for the first time the YI value was then measured.

All results of these determinations are summarized in Table 2.

**Table 1**

| No. Ref. | Antioxidant additives | | | | | | Non-antioxidant additives | |
|---|---|---|---|---|---|---|---|---|
| | Phenolic type AO | | | Phosphite-type AO | | Sulphur-containing AO | | |
| | AO-I-1 | AO-I-2 | AO-I-3 | AO-II-1 | AO-II-2 | AO-III | NO1 | NO2 |
| | | | | | | | | |
| 1* | 1200 ppm | - | - | 2400 ppm | - | 3000 ppm | 600 ppm | 2000 ppm |
| 2 | 1200 ppm | - | - | - | 1600 ppm | 3000 ppm | 600 ppm | 2000 ppm |
| 3 | 1200 ppm | - | - | - | 800 ppm | 3000 ppm | 600 ppm | 2000 ppm |
| 4* | - | 600 ppm | - | 1600 ppm | - | 3000 ppm | 600 ppm | 2000 ppm |
| | | | | | | | | |
| 5* | - | 300 ppm | - | 1600 ppm | - | 3000 ppm | 600 ppm | 2000 ppm |
| 6 | - | 600 ppm | - | - | 800 ppm | 3000 ppm | 600 ppm | 2000 ppm |
| 7 | - | 300 ppm | - | - | 800 ppm | 3000 ppm | 600 ppm | 2000 ppm |
| 8* | 1200 ppm | - | - | 2400 ppm | - | 3000 ppm | 600 ppm | - |
| 9 | 1200 ppm | - | - | - | 800 ppm | 3000 ppm | 600 ppm | - |
| 10 | - | 300 ppm | - | - | 800 ppm | 3000 ppm | 600 ppm | - |

| | | | | | | | | |
|---|---|---|---|---|---|---|---|---|
| * Not according to the invention | | | | | | | | |

**Table 2**

| Ref. No. | mfr after multiple extrusion | | | | YI after multiple extrusion | | | | Long term heat stability | |
|---|---|---|---|---|---|---|---|---|---|---|
| | 0. | 1. | 3. | 5. | 0. | 1. | 3. | 5. | hours to degrad. | YI after degrad. |
| | | | | | | | | | | |
| 1* | 3,1 | 3, 3 | 3, 7 | 3, 8 | -1, 4 | -1,6 | 0 | 1,3 | 2620 | 43 |
| 2 | 3,0 | - | - | - | -1,5 | - | - | - | 3070 | 46 |
| 3 | 3,0 | 3,2 | 3,5 | 3,7 | -1,6 | -1,1 | 1,7 | 3,4 | 3020 | 47 |
| 4* | 2,9 | - | - | - | -0,8 | - | - | - | 2500 | 47 |
| | | | | | | | | | | |
| 5* | 3, 0 | - | - | - | -1,7 | - | - | - | 2280 | 35 |
| 6 | 3,0 | - | - | - | -1,0 | - | - | - | 3070 | 47 |
| 7 | 3.0 | 3,2 | 3,6 | 3,9 | -1,7 | -0,9 | 1,7 | 3 | 3020 | 36 |
| 8* | 3,0 | 3,2 | 3,6 | 3,7 | -1,9 | -1,6 | -1,1 | 0,4 | 2620 | 42 |
| 9 | 3,0 | 3,2 | 3,5 | 3,9 | -2,2 | -2,0 | -0,8 | 0,3 | 3020 | 47 |
| 10 | 3,0 | 3,2 | 3,8 | 4,3 | -2,4 | -1,6 | -0,6 | 0,2 | 3120 | 38 |

| | | | | | | | | | | |
|---|---|---|---|---|---|---|---|---|---|---|
| * Not according to the invention | | | | | | | | | | |

### Effect of Bis(2,4-dicumylphenyl)pentaerythritol diphosphite on process stability and LTHS

The equal mfr values after compounding (3,0 +/-0,1) for all of the formulations show a very good process stabilising in each sample.

In the series of Ref. No. 1-3, Pentaerythrityl-tetrakis(3-(3',5'-di-tert.-butyl-4-hydroxyphenyl)-propionate (Irganox 1010 ™, AO-I-1) is constant, and 2400 ppm Tris(2,4-di-t-butylphenyl)phosphite (Irgafos 168 ™, AO-II-1) is compared with 1600 ppm and 800 ppm of Bis(2,4-dicumylphenyl)-pentaerythritol diphosphite (Doverphos S-9228 ™) (AO-II-2). The results of mfr and YI after multiple extrusions are similar, though a little stronger yellowing effect was observed after the 5th extrusion of the sample comprising 800 ppm Doverphos S-9228 ™ (AO-II-2).

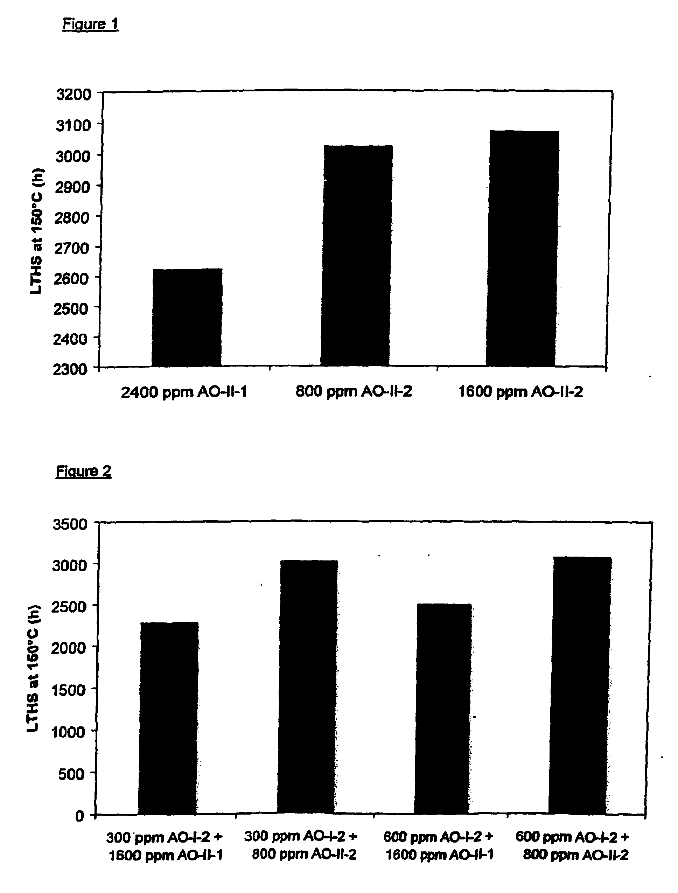

Figure 1 shows a comparison of LTHS values (hours at 150°C before start of degradation) for the formulations with 1200 ppm Irganox 1010 ™ (AO-I-1). It can be taken from these results that, in contrast to the generally acknowledged opinion in the prior art, the phosphite also influences LTHS. An increase of more than 400 hours at 150° by replacing 2400 ppm Irgafos 168 ™ (AO-II-1) with 800 ppm Doverphos S-9228 ™ (AO-II-2) is quite considerable. Doubling the amount of Doverphos S-9228 ™ (AO-II-2) only gives a slight increase in LTHS. This proves that a smaller amount of the preferred Doverphos S-9228 leads to improved LTHS properties of the polymer.

Figure 2 reflects the corresponding results for samples comprising another phenolic-type antioxidant, i.e. 1,3,5-Tris(4-tert.-butyl-3-hydroxy-2,6-dimethylbenzyl)-1,3,5-triazine-2,4,6-(1H,3H,5H)-trione (Cyanox 1790 ™, AO-I-2).

These results show that, by doubling the concentration of Cyanox 1790 ™ (AO-I-2) from 300 ppm to 600 ppm, only a slight increase in LTHS was achieved for both Irgafos 168 ™ (AO-II-1) and Doverphos S-9228 ™ (AO-II-2), but by replacing 1600 ppm Irgafos 168 ™ (AO-II-1) with 800 ppm Doverphos S-9228 ™ (AO-II-2), the LTHS increased by more than 700 hours (1 month) at 150°C. This finding is surprising in view of the prior art and shows a synergistic effect for the compounds as used.

2000 ppm of the talc Tital 10 ™ (Incemin, Inc.) seems to have only a minor or no effect on both process stability and LTHA (Table 2). In this respect, it is to be noted that Tital 10 ™ is a very pure talc.

## Claims

1. A stabilized polymer composition comprising a polyolefin and an antioxidant composition for improving the long term heat stability of polyolefins, said antioxidant composition comprising:
(a) 0.01% - 0.5% by weight of at least one sterically hindered phenolic compound, wherein said phenolic compound contains at least one phenolic moiety of general formula (I):
[HO-(R₁R₂R₃R₄Phenyl)-] (I)
wherein R₁, R₂, R₃ or R₄ may be the same or different and at least one of R₁, R₂, R₃ or R₄ is selected from the group consisting of branched alkyl having 1 to 12 carbon atoms, preferably tert.-butyl, iso-propyl, cyclohexyl, cyclopentyl and adamantyl, the others of R₁ R₂, R₃ or R₄ being H or lower alkyl having 1 to 6 carbon atoms;
(b) 0.01% - 0.5% by weight of one phosphorous compound, wherein said one phosphorous compound is Bis(2,4-dicumylphenyl) pentaerythritol diphosphite;
(c) 0.01% - - 1% by weight of at least one sulphur-containing compound of general formula (III):
R₈-(S)ₓ-R₉ (III)
wherein x = 1 or 2, and wherein R₈ and R₉ may be the same or different and are selected from the group consisting of C₁₀-C₂₅ alkyl groups optionally being substituted with C₁-C₁₂ alkyl ester carboxylates,
wherein said % by weight values are referred to the polymer composition.

2. A stabilized polymer composition according to claim 1, comprising a polyolefin and an antioxidant composition, wherein said antioxidant composition comprises:
(a) 0.02% - 0.2% by weight of said at least one sterically hindered phenolic compound,
(b) 0.03% - 0.2% by weight of one phosphorous compound, wherein said one phosphorous compound is Bis(2,4-dicumylphenyl) pentaerythritol diphosphite, and
(c) 0.05% - 0.6% by weight of said at least one sulphur-containing compound of general formula (III),
wherein said % by weight values are referred to the polymer composition.

3. A stabilized polymer composition according to claim 1, comprising a polyolefin and an antioxidant composition, wherein said antioxidant composition comprises:
(a) 0.03% - 0.15% by weight of said at least one sterically hindered phenolic compound,
(b) 0.05% - 0.15% by weight of one phosphorous compound, wherein said one phosphorous compound is Bis(2,4-dicumylphenyl) pentaerythritol diphosphite, and
(c) 0.1% - 0.5% by weight of said at least one sulphur-containing compound of general formula (III),
wherein said % by weight values are referred to the polymer composition.

4. The stabilized polymer composition of any of claims 1 to 3, wherein the phenolic compound contains at least one phenolic moiety of general formula (Ia):
HO- (R₁R₂R₃R₄Phenyl)-W (Ia)
wherein R₁ and R₄ being in the 2- and 6-position of the phenol residue may be the same or different and are selected from the group consisting of preferably branched C₁ to C₁₂ alkyl, particularly tert.-butyl, iso-propyl, cyclohexyl, cyclopentyl and adamantyl residues, R₂ and R₃ having the meaning as given before, and W is selected from C₁ to C₁₂ alkyl, C₁ to C₁₂ alkoxy, C₁ to C₁₂ alkyl carboxylate or C₁ to C₁₂ alkyl substituted by another group of the formula HO-(R₁R₂R₃R₄Phenyl)-, wherein R₁ to R₄ have the meaning as indicated before.

5. The stabilized polymer composition of any of claims 1 to 4, wherein the sulphur-containing compound of general formula (III):
R₈-(S)ₓ-R₉ (III)
is selected from di (C₁-C₂₀) alkyl-(S)ₓ-di-carboxylate wherein the carboxylic acid is selected from C₁ to C₁₂ alkyl carboxylic acids.

6. The stabilized polymer composition of any of the preceding claims, wherein the sterically hindered phenolic compound is selected from the group consisting of:
- 2,6-Di-tert.-butyl-4-methyl phenol;
- Pentaerythrityl-tetrakis(3-(3',5'-di-tert.-butyl-4-hydroxyphenyl)-propionate;
- Octadecyl 3-(3',5'-di-tert.-butyl-4-hydroxyphenyl)propionate;
- 1,3,5-Trimethyl-2,4,6-tris-(3,5-di-tert.-butyl-4-hydroxyphenyl) benzene;
- 2,2'-Thiodiethylene-bis-(3,5-di-tert.-butyl-4-hydroxyphenyl)-propionate;
- Calcium-(3,5-di-tert.-butyl-4-hydroxy benzyl monoethyl-phosphonate);
- 1,3,5-Tris(3',5'-di-tert.-butyl-4'-hydroxybenzyl)-isocyanurate;
- Bis-(3,3-bis-(4'-hydroxy-3'-tert.-butylphenyl) butanoic acid)-glycolester;
- 4,4'-Thiobis (2-tert.-butyl-5-methylphenol);
- 2,2'-Methylene-bis(6-(1-methyl-cyclohexyl)paracresol);
- N,N'-hexamethylene bis(3,5-di-tert. Butyl-4-hydroxyhydrocinnamamide;
- 2,5,7,8-Tetramethyl-2(4',8',12'-trimethyltridecyl) chroman-6-ol;
- 2,2'-Ethylidenebis(4,6-di-tert.-butylphenol);
- 1,1,3-Tris(2-methyl-4-hydroxy-5-tert.-butylphenyl)butane;
- 1,3,5-Tris(4-tert.-butyl-3-hydroxy-2,6-dimethylbenzyl)-1,3,5-triazine-2,4,6-(1H,3H,5H)-trione;
- 3,9-His(1,1-dimethyl-2-(beta-(3-tert.-butyl-4-hydroxy-5-methylphenyl)propionyloxy)ethyl)-2,4,8,10-tetraoxaspiro (5,5)undecane;
- 1,6-Hexanediyl-bis(3,5-bis(1,1-dimethylethyl)-4-hydroxybenzene-propanoate);
- 2,6-Di-tert.-butyl-4-nonylphenol;
- 3,5-Di-tert.-butyl-4-hydroxyhydrocinnamic acid triester with 1,3,5-tris (2-hydroxyethyl)-s-triazine-2,4,6(1H,3H,5H)-trione;
- 4,4'-Butylidenebis(6-tert. Butyl-3-methylphenol);
- 2,2'-Methylene bis (4-methyl-6-tert.-butylphenol);
- 2,2-Bis(4-(2-(3,5-di-t-butyl-4-hydroxyhydrocinnamoyloxy))ethoxyphenyl))propane;
- Triethyleneglycol-bis-(3-tert.-butyl-4-hydroxy-5 methylphenyl) propionate;
- Benzenepropanoic acid, 3,5-bis(1,1-dimethylethyl)-4-hydroxy-, C₁₃-C₁₅-branched and linear alkyl esters;
- 6,6'-Di-tert.-butyl-2,2'-thiodi-p-cresol;
- Diethyl((3,5-bis(1,1-dimethylethyl)-4-hydroxyphenyl)methyl) phosphonate;
- 4,6-Bis(octylthiomethyl)o-cresol;
- Benzenepropanoic acid, 3,5-bis(1,1-dimethylethyl)4-hydroxy-, C₇-C₉-branched and linear alkyl esters;
- 1,1,3-Tris[2-methyl-4-[3-(3,5-di-t-butyl-4-hydroxyphenyl)propionyloxy]-5-t-butylphenyl] butane; and
- Butylated reaction product of p-cresol and dicyclopentadiene.

7. The stabilized polymer composition of any of the preceding claims, wherein the sulphur-containing compound is selected from the group consisting of:
- Di-stearyl-thio-di-propionate;
- Di-palmityl/stearyl-thio-di-propionate;
- Di-lauryl-thio-di-propionate;
- Di-tridecyl-thio-di-propionate;
- Di-myristyl-thio-di-propionate;
- Pentaerythritol octyl thiodipropionate;
- Lauryl-stearyl-thio-di-propionate;
- Di-octadecyl-disulphide;
- Di-tert-dodecyl-disulphide and
- Pentaerythritol-tetrakis-(3-laurylthiopropionate)

8. The stabilized polymer composition of any of the preceding claims, wherein the sterically hindered phenolic compound is selected from the group consisting of:
- Pentaerythrityl-tetrakis(3-(3',5'-di-tert.-butyl-4-hydroxypheyl)-propionate;
- Octadecyl 3-(3',5'-di-tert.-butyl-4-hydroxyphenyl)propionate;
- 1,3,5-Trimethyl-2,4,6-tris-(3,5-di-tert.-butyl-4-hydroxyphenyl) benzene;
- 1,3,5-Tris(3',5'-di-tert.-butyl-4'-hydroxybenzyl)-isocyanurate;
- Bis-(3,3-bis-(4'-hydroxy-3'-tert. butylphenyl)butanoic acid)-glycolester; and
- 3,9-Bis(1,1-dimethyl-2-(beta-(3-tert.-butyl-4-hydroxy-5-methylphenyl)propionyloxy)ethyl)-2,4,8,10-tetraoxaspiro (5,5)undecane.

9. The stabilized polymer composition of any of the preceding claims, wherein the sulphur-containing compound is Di-stearyl-thio-di-propionate or Di-tert-dodecyl-disulphide.

10. The stabilized polymer composition of any of any of the preceding claims, wherein
(a) the sterically hindered phenolic compound is 1,3,5-Tris(4-tert.-butyl-3-hydroxy-2,6-dimethylbenzyl)-1,3,5-triazine-2,4,6-(1H,3H,5H)-trione or pentaerythrityl-tetrakis(3-(3',5'-di-tert.-butyl-4-hydroxyphenyl)-propionate; and
(b) the sulphur-containing compound is Di-stearyl-thio-di-propionate.

11. The stabilized polymer composition of any of claims 1-10, wherein said composition further comprises metal deactivators and/or UV-stabilisers.

12. The stabilized polymer composition of claim 11, wherein said UV-stabilizers are sterically hindered amines.

13. The stabilized polymer composition of any of the preceding claims, wherein said polyolefin is a homo- or co-polymer of polyethylene, polypropylene and polybutadiene.

14. Use of the antioxidant composition as defined in any of claims 1-11 for reducing degradation of a polyolefin material during processing and end use of said polyolefin material.

15. The use of claim 14 for increasing long term thermal stability of the polyolefin material.

16. Method for producing a polyolefin article having an improved long term thermal stability against ageing by radical degradation processes comprising the steps of:
(a) providing an unstabilised base polyolefin material;
(b) adding to said base polyolefin material the antioxidant composition as defined in any of the preceding claims;
(c) converting the composition obtained in step (b) in a melt-forming process; and
(d) confectioning the polyolefin material obtained in step (c).

17. she method of claim 16 further comprising adding other stabilisers and/or modifiers before the converting step c).

18. The method of any of claims 16 or 17, wherein the converting step includes injection moulding, blow moulding, rotational moulding and extrusion.

19. The method of any of claims 16 to 18, wherein the confectioning step includes cutting, lamination and/or welding.

20. Polyolefin article having an increased long term ageing stability obtained by the method of any of claims 16-19.

## Patentansprüche

1. Eine stabilisierte Polymerzusammensetzung, die ein Polyolefin und eine Antioxidationsmittel-Zusammensetzung zur Verbesserung der Langzeit-Wärmestabilität von Polyolefinen umfasst, wobei die Antioxidationsmittel-Zusammensetzung umfasst:
(a) 0.01 - 0.5 Gew.-% wenigstens einer sterisch gehinderten Phenolverbindung, wobei die Phenolverbindung wenigstens eine Phenoleinheit der allgemeinen Formel (I)
[HO-(R₁R₂R₃R₉Phenyl)-] (I)
enthält, wobei R₁, R₂, R₃ oder R₄ gleich oder verschieden sein können und wenigstens eines von R₁, R₂, R₃ oder R₄ aus der Gruppe, die aus verzweigtem Alkyl mit 1 bis 12 Kohlenstoffatomen, bevorzugt tert.-Butyl, iso-Propyl, Cyclohexyl, Cyclopentyl und Adamantyl, besteht, ausgewählt wird und die anderen von R₁, R₂, R₃ oder R₄ -H oder niederes Alkyl mit 1 bis 6 Kohlenstoffatomen sind;
(b) 0.01 - 0.5 Gew.-% einer Phosphorverbidung, wobei die Phosphorverbindung Bis-(2,4-dicumylphenyl)pentaerythritoldiphosphit ist,
(c) 0.01 - 1 Gew.-% wenigstens einer schwefelhaltigen Verbindung der allgemeinen Formel (III)
R₈-(S)ₓ-R₉ (III),
wobei x = 1 oder 2 ist und wobei R₈ und R₉ gleich oder verschieden sein können und aus der Gruppe, die aus C₁₀-C₂₅ Alkylgruppen, die optional mit C₁-C₁₂ Alkylestercarboxylaten substituiert sind, besteht, ausgewählt werden,
wobei sich die Gew.-%-Werte auf die Polymerzusammensetzung beziehen.

2. Eine stabilisierte Polymerzusammensetzung gemäß Anspruch 1, die ein Polyolefin und eine Antioxidationsmittel-Zusammensetzung umfasst, wobei die Antioxidationsmittel-Zusammensetzung umfasst:
(a) 0.02 - 0.2 Gew.-% der wenigstens einen sterisch gehinderten Phenolverbindung,
(b) 0.03 - 0.2 Gew.-% einer Phosphorverbindung, wobei die Phosphorverbindung Bis-(2,4-dicumylphenyl)pentaerythritoldiphosphit ist, und
(c) 0.05 - 0.6 Gew.-% der wenigstens einen schwefelhaltigen Verbindung der allgemeinen Formel (III),
wobei sich die Gew.-%-Werte auf die Polymerzusammensetzung beziehen.

3. Eine stabilisierte Polymerzusammensetzung gemäß Anspruch 1, die ein Polyolefin und eine Antioxidationsmittel-Zusammensetzung umfasst, wobei die Antioxidationsmittel-Zusammensetzung umfasst:
(a) 0.03 - 0.15 Gew.-% der wenigstens einen sterisch gehinderten Phenolverbindung,
(b) 0.05 - 0.15 Gew.-% einer Phosphorverbindung, wobei die Phosphorverbindung Bis-(2,4-dicumylphenyl)pentaerythritoldiphosphit ist, und
(c) 0.1 - 0.5 Gew.-% der wenigstens einen schwefelhaltigen Verbindung der allgemeinen Formel (III),
wobei sich die Gew.-%-Werte auf die Polymerzusammensetzung beziehen.

4. Die stabilisierte Polymerzusammensetzung gemäß einem der Ansprüche 1 bis 3, wobei die Phenolverbindung wenigstens eine Phenoleinheit der allgemeinen Formel (Ia)
[HO-(R₁R₂R₃R₄Phenyl)-W] (Ia)
enthält, wobei R₁ und R₄, die sich an der 2- und 6-Position des Phenylrestes befinden, gleich oder verschieden sein können und aus der Gruppe, die bevorzugt aus verzweigtem C₁ bis C₁₂ Alkyl, insbesondere tert.-Butyl-, iso-Propyl-, Cyclohexyl-, Cyclopentyl- und Adamantylresten, besteht, ausgewählt werden, R₂ und R₃ die gleiche Bedeutung wie oben angegeben haben und W aus C₁ bis C₁₂ Alkyl, C₁ bis C₁₂ Alkoxy, C₁ bis C₁₂ Alkylcarboxylat oder C₁ bis C₁₂ Alkyl, das durch eine andere Gruppe der Formel HO-(R₁R₂R₃R₄Phenyl)-, wobei R₁ bis R₄ die gleiche Bedeutung wie oben angegeben haben, substituiert ist, ausgewählt wird.

5. Die stabilisierte Polymerzusammensetzung gemäß einem der Ansprüche 1 bis 4, wobei die schwefelhaltige Verbindung der allgemeinen Formel (III)
R₈-(S)ₓ-R₉ (III)
aus Di-(C₁-C₂₀)-Alkyl-(S)ₓ-dicarboxylat ausgewählt wird, wobei die Carbonsäure aus C₁ bis C₁₂ Alkylcarbonsäuren ausgewählt wird.

6. Die stabilisierte Polymerzusammensetzung gemäß einem der vorangegangenen Ansprüche, wobei die sterisch gehinderte Phenolverbindung aus der Gruppe, die aus
- 2,6-Di-tert.-butyl-4-methylphenol,
- Pentaerthyrityl-tetrakis(3-(3',5'-di-tert.-butyl-4-hydroxyphenyl)propionat,
- Octadecyl-3-(3',5'-di-tert.-butyl-4-hydroxyphenyl)-propionat,
- 1,3,5-Trimethyl-2,4,6-tris-(3,5-di-tert.-butyl-4-hydroxyphenyl)benzol,
- 2,2'-Thiodiethylen-bis-(3,5-di-tert.-butyl-4-hydroxyphenyl)propionat,
- Calcium-(3,5-di-tert.-butyl-4-hydroxybenzylmonoethylphosphonat),
- 1,3,5-Tris-(3',5'-di-tert.-butyl-4'-hydroxybenzyl)-isocyanurat,
- Bis-(3,3-bis-(4'-hydroxy-3'-tert.-butylphenyl)-buttersäure)glycolester,
- 4,4'-Thiobis-(2-tert.-butyl-5-methylphenol),
- 2,2'-Methylen-bis-(6-(1-methylcyclohexyl)paracresol),
- N,N'-Hexamethylen-bis-(3,5-di-tert.-butyl-4-hydroxyhydrocinnamamid,
- 2,5,7,8-Tetramethyl-2-(4',8.',12'-trimethyltridecyl)-chroman-6-ol,
- 2,2'-Ethyliden-bis-(4,6-di-tert.-butylphenol),
- 1,1,3-Tris-(2-methyl-4-hydroxy-5-tert.-butylphenyl)butan,
- 1,3,5-Tris-(4-tert.-butyl-3-hydroxy-2,6-dimethylbenzyl)-1,3,5-triazin-2,4,6-(1H,3H,5H)-trion,
- 3,9-Bis-(1,1-dimethyl-2-(beta-(3-tert.-butyl-4-hydroxy-5-methylphenyl)propionyloxy)ethyl)-2,4,8,10-tetraoxaspiro-(5,5)-undecan,
- 1,6-Hexandiyl-bis-(3,5-bis-(1,1-dimethylethyl)-4-hydroxybenzolpropionat,
- 2,6-Di-tert.-butyl-4-nonylphenol,
- 3,5-Di-tert.-butyl-4-hydroxyhydrozimtsäuretriester mit 1,3,5-Tris-(2-hydroxyethyl)-s-triazin-2,4,6-(1H,3H,5H)-trion,
- 4,4'-Butyliden-bis-(6-tert.-butyl-3-methylphenol),
- 2,2'-Methylen-bis-(4-methyl-6-tert.-butylphenol),
- 2,2-Bis-(4-(2-(3,5-di-tert.-butyl-4-hydroxyhydrocinnamoyloxy))ethoxyphenyl)propan,
- Triethylenglycol-bis-(3-tert.-butyl-4-hydroxy-5-methylphenyl)propionat,
- Benzolpropansäure-3,5-Bis-(1,1-dimethylethyl)-4-hydroxy-, C₁₃-C₁₅-verzweigte und lineare Alkylester,
- 6,6'-Di-tert.-butyl-2,2'-thiodi-p-cresol,
- Diethyl-((3,5-bis-(1,1-dimethylethyl)-4-hydroxyphenyl)methyl)phosphonat,
- 4,6-Bis-(octylthiomethyl)-o-cresol,
- C₇-C₉-verzweigte und lineare Alkylester von 3,5-Bis-(1,1-dimethylethyl)-4-hydroxy-Benzolpropansäure,
- 1,1,3-Tris-[2-methyl-4-[3-(3,5-di-tert.-butyl-4-hydroxyphenyl)propionyloxy]-5-tert.-butylphenyl]butan und
- butyliertem Reaktionsprodukt von p-Cresol und Dicyclopentadien,
besteht, ausgewählt wird.

7. Die stabilisierte Polymerzusammensetzung gemäß einem der vorangegangenen Ansprüche, wobei die schwefelhaltige Verbindung aus der Gruppe, die aus
- Distearylthiodipropionat,
- Dipalmityl/stearylthiodipropionat,
- Dilaurylthiodipropionat,
- Ditridecylthiodipropionat,
- Dimyristylthiodipropionat,
- Pentaerythritoloctylthiodipropionat,
- Laurylstearylthiodipropionat,
- Dioctyldisulfid,
- Ditertdodecyldisulfid und
- Pentaerythritoltetrakis-(3-laurylthiopropionat)
besteht, ausgewählt wird.

8. Die stabilisierte Polymerzusammensetzung gemäß einem der vorangegangenen Ansprüche, wobei die sterisch gehinderte Phenolverbindung aus der Gruppe, die aus
- Pentaerythritoltetrakis-(3-(3',5'-di-tert.-butyl-4-hydroxyphenyl)propionat,
- Octadecyl-3-(3',5'-di-tert.-butyl-4-hydroxyphenyl)-propionat,
- 1,3,5-Trimethyl-2,4,6-tris-(3,5-di-tert.-butyl-4-hydroxyphenyl)benzol,
- 1,3,5-Tris-(3',5'-di-tert.-butyl-4'-hydroxybenzyl)-isocyanurat,
- Bis-(3,3-bis-(4'-hydroxy-3'-tert.-butylphenyl)-buttersäure)glycolester und
- 3,9-Bis-(1,1-dimethyl-2-(beta-(3-tert.-butyl-4-hydroxy-5-methylphenyl)propionyloxy)ethyl)-2,4,8,10-tetraoxaspiro-(5,5)-undecan
besteht, ausgewählt wird.

9. Die stabilisierte Polymerzusammensetzung gemäß einem der vorangegangenen Ansprüche, wobei die schwefelhaltige Verbindung Distearylthiodipropionat oder Ditertdodecyldisulfid ist.

10. Die stabilisierte Polymerzusammensetzung gemäß einem der vorangegangenen Ansprüche, wobei
(a) die sterisch gehinderte Phenolverbindung 1,3,5-Tris-(4-tert.-butyl-3-hydroxy-2,6-dimethylbenzyl-1,3,5-triazin-2,4,6-(1H,3H,5H)-trion oder Pentaerythrityltetrakis-(3-(3',5'-di-tert.-butyl-4-hydroxyphenyl)propionat ist und
(b) die schwefelhaltige Verbindung Distearylthiodipropionat ist.

11. Die stabilisierte Polymerzusammensetzung gemäß einem der Ansprüche 1-10, wobei die Zusammensetzung ferner Metalldeaktivierungsmittel und/oder UV-Stabilisatoren umfasst.

12. Die stabilisierte Polymerzusammensetzung gemäß Anspruch 11, wobei die UV-Stabilisatoren sterisch gehinderte Amine sind.

13. Die stabilisierte Polymerzusammensetzung gemäß einem der vorangegangenen Ansprüche, wobei das Polyolefin ein Homo-oder Co-Polymer von Polyethylen, Polypropylen und Polybutadien ist.

14. Verwendung der Antioxidationsmittel-Zusammensetzung, wie in einem der Ansprüche 1-11 definiert, zur Verringerung des Abbaus eines Polyolefinmaterials während der Verarbeitung und des Endgebrauchs des Polyolefinmaterials.

15. Die Verwendung gemäß Anspruch 14 zur Steigerung der thermischen Langzeitstabilität des Polyolefinmaterials.

16. Verfahren zur Herstellung eines Polyolefingegenstandes mit einer gegenüber Alterung durch Radikalabbauprozesse verbesserten thermischen Langzeitstabilität, das die Schritte umfasst:
(a) Bereitstellen eines nichtstabilisierten Polyolefinausgangsmaterials,
(b) Hinzufügen der wie in einem der vorangegangenen Ansprüche definierten Antioxidationsmittel-Zusammensetzung zu dem Polyolefinausgangsmaterial,
(c) Umwandeln der in Schritt (b) erhaltenen Zusammensetzung in einem Schmelzformungsverfahren und
(d) Konfektionieren des in Schritt (c) erhaltenen Polyolefinmaterials.

17. Das Verfahren gemäß Anspruch 16, das ferner das Hinzufügen anderer Stabilisatoren und/oder Modifizierer vor dem Umwandlungsschritt umfasst.

18. Das Verfahren gemäß einem der Ansprüche 16 oder 17, wobei der Umwandlungsschritt Spritzgiessen, Blasformen, Rotationsformen und Extrusion beinhaltet.

19. Das Verfahren gemäß einem der Ansprüche 16 bis 18, wobei der Konfektionierungsschritt Schneiden, Laminieren und/oder Schweißen beinhaltet.

20. Polyolefingegenstand mit einer gesteigerten Langzeitalterungsstabilität, erhalten durch das Verfahren gemäß einem der Ansprüche 16-19.

## Revendications

1. Composition polymère stabilisée comprenant une polyoléfine et une composition antioxydante pour améliorer la stabilité thermique à long terme des polyoléfines, ladite composition antioxydante comprenant :
(a) de 0,01 % à 0,5 % en poids d'au moins un composé phénolique stériquement encombré, dans lequel ledit composé phénolique contient au moins une fraction phénolique de formule générale (I) :
[HO-(R₁R₂R₃R₄Phényl)-] (I)
dans laquelle R₁, R₂, R₃ ou R₄ peuvent être identiques ou différents et au moins un de R₁, R₂, R₃ ou R₄ est choisi dans le groupe constitué d'un alkyle ramifié ayant de 1 à 12 atomes de carbone, de préférence tert.-butyle, iso-propyle, cyclohexyle, cyclopentyle et adamantyle, les autres de R₁, R₂, R₃ ou R₄ étant H ou un alkyle inférieur ayant de 1 à 6 atomes de carbone ;
(b) de 0,01 % à 0,5 % en poids d'un composé phosphoré, dans lequel ledit composé phosphoré est Bis(2,4-dicumylphényl)pentaérythritol diphosphite ;
(c) de 0,01 % à 1 % en poids d'au moins un composé contenant du soufre de formule générale (III) :
R₈-(S)ₓ-R₉ (III)
dans laquelle x = 1 ou 2, et dans laquelle R₈ et R₉ peuvent être identiques ou différents et sont choisis dans le groupe constitué de groupes alkyle en C₁₀ à C₂₅ étant éventuellement substitués avec des esters alkyliques de carboxylates en C₁ à C₁₂, dans laquelle lesdits pourcentages en poids sont basés sur la composition de polymère.

2. Composition polymère stabilisée selon la revendication 1, comprenant une polyoléfine et une composition antioxydante, dans laquelle ladite composition antioxydante comprend :
(a) de 0,02 % à 0,2 % en poids dudit au moins un composé phénolique stériquement encombré,
(b) de 0,03 % à 0,2 % en poids d'un composé phosphoré, dans lequel ledit composé phosphoré est Bis(2,4-dicumylphényl)pentaérythritol diphosphite, et
(c) de 0,05 % à 0,6 % en poids dudit au moins un composé contenant du soufre de formule générale (III),
dans laquelle lesdits pourcentages en poids sont basés sur la composition de polymère.

3. Composition polymère stabilisée selon la revendication 1, comprenant une polyoléfine et une composition antioxydante, dans laquelle ladite composition antioxydante comprend :
(a) de 0,03 % à 0,15 % en poids dudit au moins un composé phénolique stériquement encombré,
(b) de 0,05% à 0,15% en poids d'un composé phosphoré, dans lequel ledit composé phosphoré est Bis(2,4-dicumylphényl)pentaérythritol diphosphite, et
(c) de 0,1 à 0,5 % en poids dudit au moins un composé contenant du soufre de formule générale (III),
dans laquelle lesdits pourcentages en poids sont basés sur la composition de polymère.

4. Composition polymère stabilisée selon l'une quelconque des revendications 1 à 3, dans laquelle le composé phénolique contient au moins un fragment phénolique de formule générale (la) :
HO-(R₁R₂R₃R₄Phenyl)-W (Ia)
dans laquelle R₁ et R₄, étant en position 2- et 6- du résidu phénol, peuvent être identiques ou différents et sont choisis dans le groupe constitué d'alkyle en C₁ à C₁₂ de préférence ramifié en particulier de résidus tert.-butyle, iso-propyle, cyclohexyle, cyclopentyle et adamantyle, R₂ et R₃ ayant la signification telle que donnée avant, et W est choisi parmi un alkyle en C₁ à C₁₂, un alcoxy en C₁ à C₁₂, un carboxylate d'alkyle en C₁ à C₁₂ ou un alkyle en C₁ à C₁₂ substitué par un autre groupe de formule HO-(R₁R₂R₃R₄Phényl)-, dans laquelle R₁ à R₄ ont la signification telle qu'indiquée ci-dessus.

5. Composition polymère stabilisée selon l'une quelconque des revendications 1 à 4, dans laquelle le composé contenant du soufre de formule générale (III) :
R₈-(S)ₓ-R₉ (III)
est choisi parmi le di-alkyle (en C₁ à C₂₀)-(S)ₓ-di-carboxylate dans lequel l'acide carboxylique est choisi parmi les acides alkyle en C₁ à C₁₂ carboxyliques.

6. Composition polymère stabilisée selon l'une quelconque des revendications précédentes, dans laquelle le composé phénolique stériquement encombré est choisi dans le groupe constitué de :
- 2,6-di-tert.-butyl-4-méthyl phénol;
- pentaérythrityl-tétrakis(3-(3',5'-di-tert.-butyl-4-hydroxyphényl)-propionate ;
- octadécyl 3-(3',5'-di-tert.-butyl-4-hydroxyphényl)propionate ;
- 1,3,5-triméthyl-2,4,6-tris-(3,5-di-tert.-butyl-4-hydroxyphényl) benzène ;
- 2,2'-thiodiéthylène-bis-(3,5-di-tert.-butyl-4-hydroxyphényl)-propionate ;
- calcium-(3,5-di-tert.-butyl-4-hydroxy benzyl monoéthyl-phosphonate) ;
- 1,3,5-tris(3',5'-di-tert.-butyl-4'-hydroxybenzyl)-isocyanurate ;
- bis-(acide 3,3-bis-(4'-hydroxy-3'-tert.-butylphényl) butanoïque)-glycolestcr ;
- 4,4'-thiobis (2-tert.-butyl-5-méthylphénol) ;
- 2,2'-méthylène-bis-(6-(1-méthyl-cyclohexyl)para-crésol) ;
- N,N'-hexaméthylène bis(3,5-di-tert.-butyl-4-hydroxy-hydrocinnamamide) ;
- 2,5,7,8-tétraméthyl-2(4',8',12'-triméthyltridécyl) chroman-6-ol ;
- 2,2'-éthylidènebis(4,6-di-tert.-butylphénol) ;
- 1,1,3-tris(2-méthyl-4-hydroxy-5-tert.-butylphényl) butane ;
- 1,3,5-tris(4-tert.-butyl-3-hydroxy-2,6-liméthylbenzyl)-1,3,5-triazine-2,4,6-(1H,3H,5H)-trione ;
- 3,9-bis(1,1-diméthyl-2-(bêta-(3-tert.-butyl-4-hydroxy-5-méthylphényl)propionyloxy)éthyl)-2,4,8,10-tétraoxaspiro (5,5) undécane ;
- 1,6-hexanediyl-bis(3;5-bis(1,1-diméthyléthyl)-4-hydroxybenzène-propanoate) ;
- 2,6-di-tert.-butyl-4-nonylphénol ;
- triester d'acide 3,5-di-tert.-butyl-4-hydroxyhydrocinnamique avec la 1,3,5-tris (2-hydroxyéthyl)-s-triazine-2,4,6(1H,3H,SH)-trione ;
- 4,4'-butylidènebis(6-tert.-butyl-3-méthylphénol) ;
- 2,2'-méthylène bis(4-méthyl-6-tert.-butylphénol) ;
- 2,2-bis(4-(2-(3,5-di-t-butyl-4-hydroxyhydrocinnamoyloxy)) éthoxyphényl)) propane ;
- triéthylèneglycol-bis-(3-tert.-butyl-4-hydroxy-5-méthylphényl) propionate ;
- esters d'alkyle linéaire et ramifié en C₁₃ à C₁₅ de l'acide 3,5-bis(1,1-diméthyléthylp4-hydroxy-benzènepropanoïque ;
- 6,6'-di-tert.-butyl-2,2'-thiodi-p-crésol ;
- diéthyl((3,5-bis(1,1-diméthyléthyl)-4-hydroxyphényl)méthyl) phosphonate ;
- 4,6-bis(octylthiométhyl)o-crésol ;
- esters d'alkyle linéaire ou ramifié en C₇ à C₉ de l'acide 3,5-bis(1,1-diméthyléthyl)-4-hydroxy-benzènepropanoïque ;
- 1,1,3-tris(2-méthyl-4-[3-(3,5-di-t-butyl-4-hydroxyphényl)propionyloxy]-5-t-butylphényl) butane ; et
- produit de réaction butylé du p-crésol et du dicyclopentadiène.

7. Composition polymère stabilisée selon l'une quelconque des revendications précédentes, dans laquelle le composé contenant du soufre est choisi dans le groupe constitué de :
- di-stéaryl-thio-di-propionate ;
- di-palmityl/stéaryl-thio-di-propionate ;
- di-lauryl-thio-di-propionate ;
- di-tridécyl-thio-di-propionate ;
- di-myristyl-thio-di-propionate ;
- pentaérythritol octyl thiodipropionate ;
- lauryl-stéaryl-thio-di-propioante ;
- di-octadécyl-disulfure ;
- di-tert.-dodécyl-disulfure ; et
- pentaérythritol-tétrakis-(3-laurylthiopropionate).

8. Composition polymère stabilisée selon l'une quelconque des revendications précédentes, dans laquelle le composé phénolique stériquement encombré est choisi dans le groupe constitué de :
- pentaérythrityl-tétrakis(3-(3',5'-di-tert.-butyl-4-hydroxyphényl)-propionate ;
- octadécyl 3-(3',5'-di-tert.-butyl-4-hydroxyphényl)propionate ;
- 1,3,5-triméthyl-2,4,6-tris-(3,5-di-tert.-butyl-4-hydroxyphényl) benzène ;
- 1,3,5-tris(3',5'-di-tert.-butyl-4'-hydroxybenzyl)-isocyanurate ;
- bis-(acide 3,3-bis-(4'-hydroxy-3'-tert.-butylphényl) butanoïque)-glycolester ; et
- 3,9-bis(1,1-diméthyl-2-(bêta-[3-tert.-butyl-4-hydroxy-5-méthylphényl] propionyloxy) éthyl)-2,4,8,10-tétraoxaspiro (5,5) undécane.

9. Composition polymère stabilisée selon l'une quelconque des revendications précédentes, dans laquelle le composé contenant du soufre est le di-stéaryl-thio-di-propionate ou le di-tert.-dodécyl-disulfure.

10. Composition polymère stabilisée selon l'une quelconque des revendications précédentes, dans laquelle :
(a) le composé phénolique stériquement encombré est la 1,3,5-tris(4-tert.-butyl-3-hydroxy-2,6-diméthylbenzyl)-1,3,5-triazine-2,4,6-(1H,3H,5H)-trione ou le pentaérythrityl-tétrakis(3-(3',5'-di-tert.-butyl-4-hydroxyphényl)-propionate, et
(b) le composé contenant du soufre est le di-stéaryl-thio-di-propionate.

11. Composition polymère stabilisée selon l'une quelconque des revendications 1 à 10, dans laquelle ladite composition comprend en outre des désactivateurs de métaux et/ou des agents de stabilisation anti-UV.

12. Composition polymère stabilisée selon la revendication 11, dans laquelle lesdits agents de stabilisation anti-UV sont des amines encombrées de manière stérique.

13. Composition polymère stabilisée selon l'une quelconque des revendications précédentes, dans laquelle ladite polyoléfine est un homo- ou un co-polymère du polyéthylène, du polypropylène et du polybutadiène.

14. Utilisation de la composition antioxydante telle que définie selon l'une quelconque des revendications 1 à 11, pour réduire la dégradation d'un matériau de polyoléfine durant la transformation et l'utilisation finale dudit matériau de polyoléfine.

15. Utilisation selon la revendication 14, pour accroître la stabilité thermique à long terme du matériau de polyoléfine.

16. Procédé pour produire un article de polyoléfine ayant une stabilité thermique à long terme améliorée contre le vieillissement par des procédés de dégradation radicalaire comprenant les étapes consistant à :
(a) fournir un matériau de polyoléfine de base non stabilisé ;
(b) ajouter audit matériau de polyoléfine de base la composition antioxydante telle que définie selon l'une quelconque des revendications précédentes;
(c) convertir la composition obtenue dans l'étape (b) dans un procédé de formage à l'état liquide ; et
(d) confectionner le matériau de polyoléfine obtenu dans l'étape (c).

17. Procédé selon la revendication 16, comprenant en outre l'ajout d'autres agents de stabilisation et/ou de modification avant l'étape de conversion (c).

18. Procédé selon l'une quelconque des revendications 16 ou 17, dans lequel l'étape de conversion comprend le moulage par injection, le moulage par extrusion-soufflage, le moulage par rotation et l'extrusion.

19. Procédé selon l'une quelconque des revendications 16 à 18, dans lequel l'étape de confection comprend le découpage, la lamination et/ou la soudure.

20. Article de polyoléfine ayant une stabilité au vieillissement à long terme accrue obtenue par le procédé selon l'une quelconque des revendications 16 à 19.
